# EUROPEAN PATENT APPLICATION

(11) **EP 3 370 034 A1**
(43) Date of publication of application: **05.09.2018**
(21) Application number: 16860133.4
(22) Date of filing: 20.10.2016
(51) Int. Cl.: G01B 5/14, G01B 7/14, G01D 5/22, B22D 11/08, B22D 11/20, B21B 38/10

(54) **DEVICE FOR MEASURING ROLL GAP OF CASTING MACHINE**

(30) Priority: 28.10.2015 KR 20150150268
(71) Applicant: Posco, Pohang-si, Gyeongsangbuk-do 37859 (KR); Power Mnc Co., Ltd., Busan 47710 (KR)
(72) Inventor: KIM, Ki Won, Gwangyang-si Jeollanam-do 57773 (KR); JEON, Jae Young, Busan 47710 (KR); KANG, Shin Eon, Gwangyang-si Jeollanam-do 57803 (KR); LEE, Joong Jae, Gwangyang-si Jeollanam-do 57811 (KR); SON, Jae Kuk, Suncheon-si Jeollanam-do 57983 (KR); KO, Eui Gyoo, Gwangyang-si Jeollanam-do 57809 (KR)
(74) Representative: Zech, Stefan Markus
(86) International application number: PCT/KR2016/011805
(87) International publication number: WO 2017/073950

(57) **Abstract**

The present invention relates to a roll gap measuring device of a casting machine, the device installed in a dummy bar to measure a roll gap in a strand of the casting machine, which includes a main body connected to the dummy bar, a supporting part provided on an upper portion of the main the body so as to move up and down, and a measuring unit for measuring the roll gap by being provided in the main body so as to move up and down, thereby stably measuring the roll gap in the strand of the casting machine.

## Description

### TECHNICAL FIELD

The present invention relates to a roll gap measuring device of a casting machine, and more particularly, to a roll gap measuring device of a casting machine, the device capable of stably measuring a roll gap in a strand of a casting machine.

### BACKGROUND ART

In general, a slab is manufactured when molten steel accommodated in a mold is cooled by going through a cooling stand. For example, a continuous casting process is a process for manufacturing semi-products of various shapes, such as slab, bloom, billet, beam blank, and the like, by injecting molten steel into a mold having a predetermined internal shape, and drawing a slab half-coagulated in the mold to a lower side of the mold continuously.

In such a continuous casting process, since the state of a strand in which the cooling of a slab is achieved greatly affects the continuous casting productivity and the quality of the slab, it is very important to check and manage the conditions a roll of the strand in order to secure the quality of the slab and improve the productivity thereof.

The roll in the strand maintains a gap predetermined for each section in order to remove center segregation inside the slab. As the slab is cast, a roll gap is changed, so that a problem in which the dimensions and quality of the slab are deteriorated occurs. Therefore, before casting the slab, the roll gap in the strand is measured using a roll gap measuring device, and an operation is performed in which the roll gap is adjusted according to the measurement result.

Typically, in order to measure a roll gap in a strand, a roll gap measuring device capable of being detachably attached to a dummy bar is used to measure the roll gap in the strand at regular intervals. However, in this case, the work load of a worker is increased by attaching and detaching a roll gap measuring device to a dummy bar, and since it takes about 2 hours to idle the dummy bar into the strand in order to measure a roll gap, the production of the slab is interrupted, and in result, the productivity thereof is lowered.

In order to solve such a problem, a roll gap measuring device being attached to a dummy bar at all times using a caliper has been proposed. In this method, since volume is increased due to the structure of a caliper-type measuring device, the installation position thereof is limited. Therefore, there is a problem in that a roll gap may not be measured at a center portion of a roll, the portion which is frequently in contact with the slab, and thus, severely worn.

### DISCLOSURE OF THE INVENTION

### TECHNICAL PROBLEM

The present invention provides a roll gap measuring device of a casting machine, the device capable of maintaining a stable position in a strand to accurately measure a roll gap, thereby improving the quality of a slab.

### TECHNICAL SOLUTION

A roll gap measuring device of a casting machine according to an embodiment of the present invention is a roll gap measuring device installed in a dummy bar to measure a roll gap in a strand of a casting machine, and may include a main body connected to the dummy bar, a supporting part provided on an upper portion of the main the body so as to move up and down, and a measuring unit for measuring the roll gap by being provided in the main body so as to move up and down.

A slit into which the supporting part is inserted may be formed on an upper surface of the main body in the longitudinal direction of the main body, and the slit may be provided in pair while being space apart from each other in the width direction of the main body.

The supporting part may include a supporting bar extended in the longitudinal direction of the main body, and an elastic member one side of which is connected to the inside of the main body and the other side of which is connected to a bottom surface of the supporting bar so as to move the supporting bar up and down.

The elastic member may be connected to a plurality of points in the longitudinal direction of the supporting bar.

The supporting bar may have an inclined surface formed at both upper portion edges thereof with respect to the longitudinal direction of the supporting bar.

The main body may have a height lower than the height of the dummy bar.

The height from a bottom surface of the main body to an upper surface of the supporting part may be greater than the height of the dummy bar, and equal to or greater than the height of the strand.

The measuring unit may include a roll gap measuring sensor provided inside the main body, and a roll gap measuring head connected to the roll gap measuring sensor and provided on the upper portion of the main body so as to move up and down.

At least a portion of the roll gap measuring sensor may be provided inside the main body, and the roll gap measuring head may be connected to an upper portion of the roll gap measuring sensor to protrude more than an upper portion the supporting part.

The roll gap measuring sensor may include a linear variable differential transformer (LVDT).

The roll gap measuring head may have a curved surface formed on an upper surface thereof.

### ADVANTAGEOUS EFFECTS

According to an embodiment of the present invention, a roll gap in a strand of a casting machine may be accurately measured. That is, by forming a roll gap measuring device to have a variable shape or size, a position of the roll gap measuring device in the strand may be constantly maintained to measure a roll gap more accurately. In addition, the size of the roll gap measuring device may be minimized to measure a gap at a plurality of points in the longitudinal direction of a guide roll. Therefore, it is possible to measure a roll gap accurately at a center portion of a guide roll, the portion which is relatively severely worn.

In addition, by installing the roll gap measuring device in a tail portion of a dummy bar, it is possible to measure a roll gap even during a casting process of a slab. That is, since the roll gap measuring device is installed in the tail portion of the dummy bar, the roll gap measuring device is farthest away from a mold into which molten steel of high temperature is introduced in a strand. Therefore, it is possible to prevent the roll gap measuring device from being deteriorated due to heat of the molten steel or a slab. Accordingly, since the roll gap measuring device is attached to the dummy bar at all times to measure a roll gap in real time during each casting process of a slab, the roll gap may be adjusted more accurately, and thus, the quality of the slab manufactured may be improved.

### BRIEF DESCRIPTION OF THE DRAWINGS

FIG. 1 is a view schematically showing a configuration of a continuous casting machine;
FIG. 2 is a perspective view of a roll gap measuring device according to an embodiment of the present invention;
FIG. 3 is a sectional view of a roll gap measuring device according to line A-A shown in FIG 2;
FIG. 4 is a sectional view of a roll gap measuring device according to line B-B shown in FIG 2;
FIG. 5 is a view showing a contact state between a roll gap measuring device and a guide roll in a strand according to an embodiment of the present invention;
FIG. 6 is a view showing a state in which a roll gap measuring device according to an embodiment of the present invention is installed in a dummy bar;
FIG. 7 is a view showing a state in which a roll gap measuring device according to an embodiment of the present invention is moved within a strand;
FIG. 8 is a view showing a state in which a roll gap measuring device according to an embodiment of the present invention is deformed by a pinch roll.

### MODE FOR CARRYING OUT THE INVENTION

Hereinafter, a method and a device for manufacturing a slab according to an embodiment of the present invention will be described in detail with reference to the accompanying drawings. However, it should be understood that the present invention is not limited to the embodiments disclosed below, but may be embodied in many different forms. These embodiments are provided so that this disclosure will be thorough and complete, and will fully convey the scope of the invention to those skilled in the art.

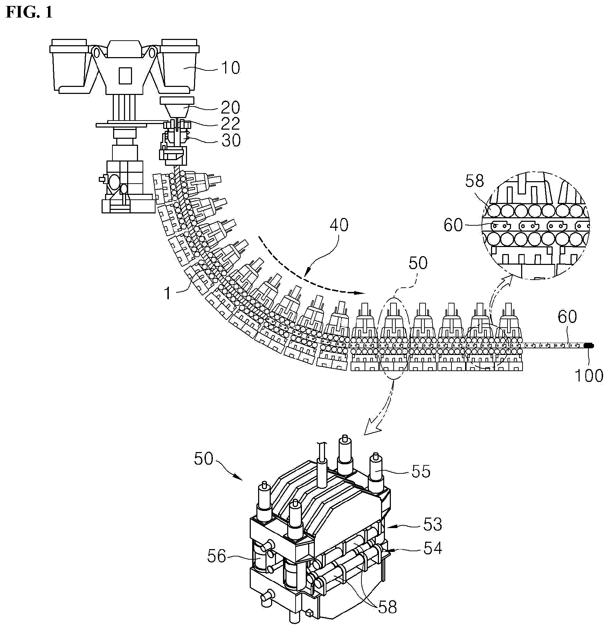

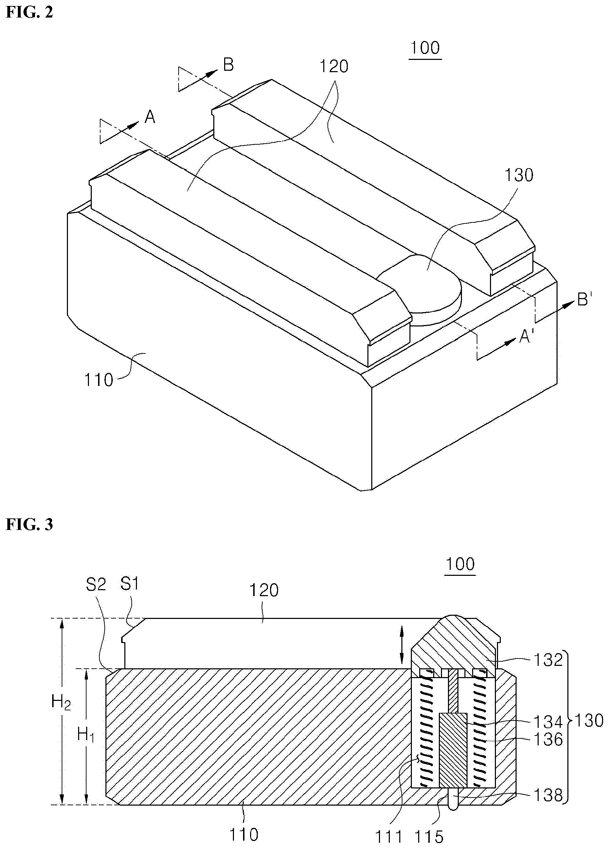

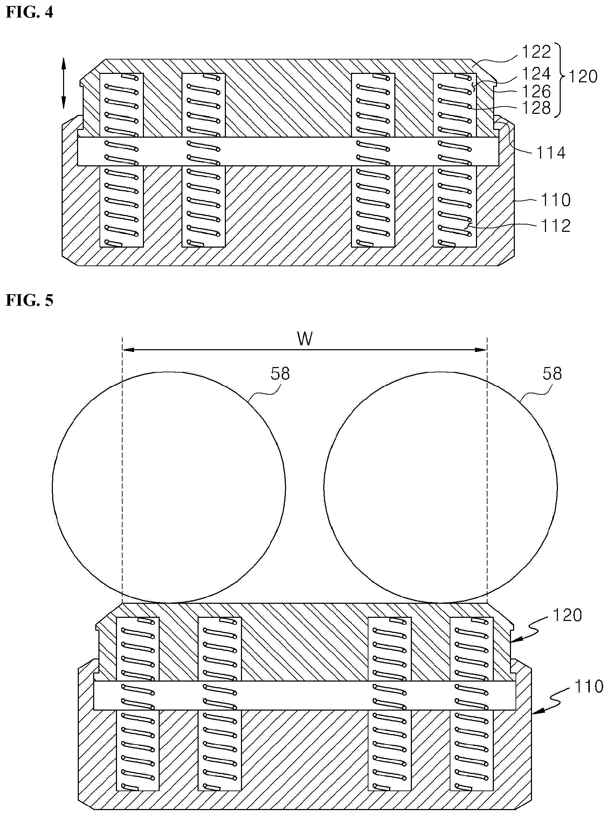

FIG. 1 is a view schematically showing a configuration of a continuous casting machine. FIG. 2 is a perspective view of a roll gap measuring device according to an embodiment of the present invention. FIG. 3 is a sectional view of a roll gap measuring device according to line A-A shown in FIG 2. FIG. 4 is a sectional view of a roll gap measuring device according to line B-B shown in FIG 2. FIG. 5 is a view showing a contact state between a roll gap measuring device and a guide roll in a strand according to an embodiment of the present invention.

Referring to FIG. 1, a continuous casting machine, which is a typical casting apparatus of a slab will be described,

A continuous casting machine includes a ladle 10 for containing molten steel refined in a steelmaking process, a tundish 20 for temporarily storing the molten steel provided through a introduction nozzle connected to the ladle 10, and a mold 30 for receiving the molten steel stored in the tundish 20 to initially coagulate the received molten steel to have a predetermined shape. In addition, the continuous casting machine includes a cooling line 40 on which a plurality of segments 50 are successively arranged to perform a series of molding operations while cooling a non-coagulated slab drawn from the mold 30 by being provided at a lower portion of the mold 30. Here, a segment 50 includes an upper frame 51 and a lower frame 52 vertically spaced apart from each other, and on the upper frame 51 and the lower frame 52, a plurality of guide roll assemblies 53 and 54 are arranged and disposed to face each other. In addition, the segment 50 includes a tie rod 56 for vertically connecting the upper frame 51 and the lower frame 52 in a spaced state, and a hydraulic cylinder 55 for adjusting a separation distance between the upper frame 51 and the lower frame 52 to apply roll force to the slab 1. While passing through the separation space between the upper frame 51 and the lower frame 52, the slab 1 drawn from the mold 30 is guided and reduced by a guide roll 58 and the plurality of guide roll assemblies 53 and 54 including a bearing housing for rotatably supporting the guide roll 58 to be formed to have a predetermined shape. That is, the plurality of segments 50 are arranged and installed in a direction crossing the direction in which the slab 1 moves, and when the slab 1 passes between the plurality of guide rolls 58 facing each other, that is the strand, the guide rolls 58 on both sides of the slab 1 reduce the slab 1.

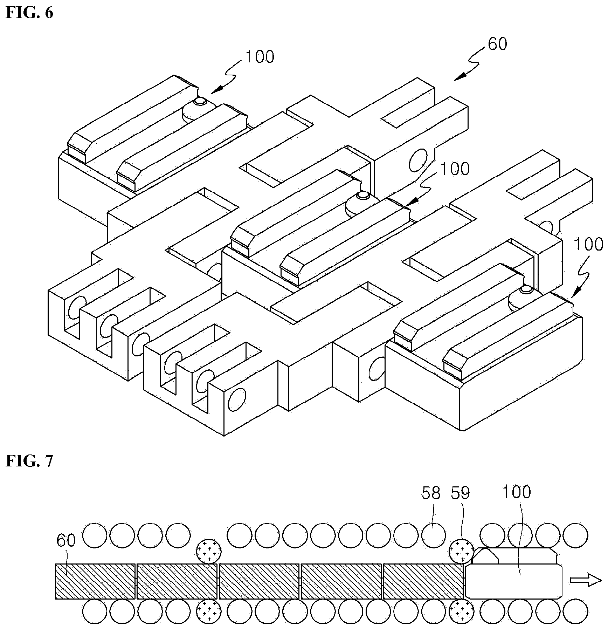

In addition, since it is difficult for the slab 1 to move along the strand due to its own weight, the dummy bar 60 is inserted inside the strand through the mold 30 before the molten steel is introduced into the mold 30. The dummy bar 60 moves along the strand by a pinch roll 59 (See FIG. 7) in the strand, and draws the slab 1 while being connected to the slab 1. The dummy bar 60 has a dummy bar tail which is first inserted into the mold 30, a dummy bar body, and a dummy bar head connected to the slab 1, all linked.

A roll gap measuring device 100 according to an embodiment of the present invention is installed in the dummy bar 60 to measure a roll gap of the guide roll 58 in the strand. The roll gap measuring device 100 is attached to the dummy bar 60 at all times to measure the roll gap in the strand each time the slab 1 is cast. This is because the roll gap measuring device 100 is attached to a tail portion of the dummy bar 60 which is hardly influenced by the molten steel or the slab 1 of high temperature during casting.

Referring to FIG. 2, the roll gap measuring device 100 may include a main body 110 connected to the dummy bar 60, a supporting part 120 provided on an upper portion of the main the body 110 so as to move up and down, and a measuring unit 130 for measuring a roll gap by being provided in the main body 100 so as to move up and down.

The main body 110 may include a body (not shown) having an open upper portion, and a space for receiving the supporting part 120 and the measuring unit 130 therein, and a cover (not shown) for covering the upper portion of the body. The main body 110 may be integrally formed, or formed in various shapes. The main body 110 may be formed in a hexahedral shape. For example, the main body 110 may be formed in a rectangular parallelepiped shape having a long side in the drawing direction of the slab 1, that is, the longitudinal direction of the strand. At this time, in the main body 110, the drawing direction of the slab 1 and the longitudinal direction of the slab 1 are referred to as the longitudinal direction of the main body 110, the width direction of the slab 1 is referred to as the width direction of the main body 110, and the thickness direction of the slab 1 is referred to as the thickness direction of the main body 110.

In the body, a supporting groove 112 for supporting the supporting part 120, and a receiving groove 111 for receiving the measuring unit 130 may be formed. The supporting groove 112 may be formed in plurality in a row in the longitudinal direction of the main body 110, and for example, may be provided as a pair on one side the body, and as a pair on the other side of the body. At this time, since a pair of supporting parts 120 may be provided on the upper portion of the main body 120 by being spaced apart from each other, the supporting groove 120 may also be formed in two rows respectively at positions where the supporting parts 120 of the body are installed, and be provided to be spaced apart from each other having the receiving groove 111 in which the measuring unit 130 is received therebetween.

The cover is connected to the upper portion of the body to block the inside of the body from the outside. In the cover, a slit (not shown) extended in the longitudinal direction of the main body 110 to have the supporting part 120 inserted thereinto, and a through hole for exposing at least a portion of the measuring unit 130 to the outside of the body may be formed. At this time, in the cover, a pair of slits may be arranged in parallel with each other having the though hole therebetween. In addition, the through hole may be provided between the pair of slits, and may be formed to be toward a center portion or one side in the longitudinal direction of the main body 110.

In addition, on the bottom of the body, a fixture 115 into which a protrusion 138 for providing a reference point when measuring a roll gap is inserted may be formed. The fixture 115 may be formed at a position corresponding to the through hole formed in the cover, and the center of the fixture 115 may be formed to coincide with the center of the through hole.

The main body 110 described above may be formed to have a height less than the height (or thickness) of the dummy bar 60. This is to prevent damage from pressure applied by the pinch roll 59 to move the dummy bar 60 when the roll gap measuring device 100 is inserted into the strand for measuring a roll gap. In addition, an inclined surface S2 is formed at an upper portion edge so that impact may be suppressed when contacted with the pinch roll 59.

Referring to FIG. 3, the measuring unit 130 may include a roll gap measuring sensor 134 having at least a portion provided in the main body 110, for example, inside the body, and a roll gap measuring head 132 provided to protrude on an upper portion of the main body 110.

At least a portion of the roll gap measuring sensor 134 may be provided inside the main body 110, and may be installed to be fixed to the receiving groove 111 in the body. At this time, as the roll gap measuring sensor 134, a linear variable differential transformer (LVDT) may be used. A linear variable differential transformer is one of displacement sensors, and is a transformer having one coil on a primary side and two coils on a secondary side. The linear variable differential transformer is a sensor which applies the principle of mutual inductance. Since this is a technique known in the art, a detailed description thereof will be omitted.

The roll gap measuring head 132 may be provided to protrude on the upper portion of the main body 110, and may be inserted into the through hole of the cover to be connected to the roll gap measuring sensor 134. The roll gap measuring head 132 may be provided to protrude on the upper portion of the main body 110 to have a height greater than that of a gap of the guide roll 58 so as to be in direct contact with the guide roll 58. The roll gap measuring head 132 may be supported inside the main body 110 by a first elastic member 136 such as a spring, and the roll gap measuring head 132 may move up and down. As the first elastic member 136, a high tension spring may be used. When pressure is applied by the pinch roll 59 or the guide roll 58, the first elastic member 136 may contract such that the roll gap measuring head 132 is lowered and moved into the main body 110. When the pressure by the pinch roll 59 or the guide roll 58 is released, the first elastic member 136 may be stretched such that the roll gap measuring head 132 is raised and returns to the original position thereof. The roll gap measuring head 132 may be formed such that an upper surface thereof has a curved surface to easily come into contact with an outer circumferential surface of the guide roll 58 or the pinch roll 59, and may be formed to protrude more than an upper surface of a supporting bar 122 to be described later.

The supporting part 120 may include the supporting bar 122 extended in the longitudinal direction of the main body 110, and a second elastic member 128 one side of which is inserted into the supporting groove 112 inside the main body 110, and the other side of which is connected to a bottom surface of the supporting bar 122 so as to move the supporting bar 122 up and down.

The supporting bar 122 may be formed to have a length long enough to be inserted into the slit, and to have a height high enough to be inserted into the strand when connected to the main body 110.

The supporting bar 122 may have an inclined surface S1 formed at both upper portion edges thereof in the longitudinal direction of the supporting bar 122, that is, the longitudinal direction of the main body 110 so that when the strand is moved for measuring a roll gap, the strand may easily pass a position at which the pinch roll 59 is installed. That is, since contact with an outer circumferential surface of the pinch roll 59 at a position at which the pinch roll 59 is installed is facilitated, the resistance due to pressure by the pinch 59 roll may be reduced.

A plurality of fixing grooves 124 for fixing the second elastic members 128 may be formed on a bottom surface of the supporting bar 122 in the longitudinal direction of the supporting bar 122. The fixing groove 124 may be formed at a position corresponding to the supporting groove 112 formed inside the main body 110.

One end of the second elastic member 128 is connected to the fixing groove 124 of the supporting bar 122, and the other end thereof is connected to the supporting groove 112 inside the main body 110 so as to move the supporting bar 122 up and down on the upper portion of the main body 110. As the second elastic member 128, a high tension spring may be used. When pressure is applied to the second elastic member 128 by the pinch roll 59 or the guide roll 58, the second elastic member 128 may contract such that the supporting bar 122 is lowered and moved into the main body 110. When the pressure by the pinch roll 59 or the guide roll 58 is released, the second elastic member 128 may be stretched such that the supporting bar 122 is raised and returns to the original position thereof. The second elastic member 128 described above may be provided at a plurality of points in the longitudinal direction of the supporting bar 122 to raise the supporting bar 122 stably.

At this time, in order to stably move the supporting bar 122, a guide groove 126 may be formed on an outer side surface of the supporting bar 122, and a guide 114 may be formed in the guide groove 126 on an inner side of the upper portion of the main body 110 contacting the outer side surface of the supporting bar 122. Therefore, the supporting bar 122 moves up and down in a state in which the guide 114 is in contact with the guide groove 126 so that separation from the main body 110 may be prevented, and the moving distance of the supporting bar 122 may be limited.

A roll gap measuring device formed as described above has the following structural characteristics.

When the supporting bar 122 is connected to the main body 110, a height H2 from a bottom surface of the main body 110 to an upper surface of the supporting bar 122, for example the height H2 of the roll gap measuring device 100, may be formed to have a height greater than that of the dummy bar 60. In addition, the height H2 of the roll gap measuring device 100 may be equal to or higher than a distance between the guide rolls 58 facing each other, that is, a roll gap. In addition, referring to FIG. 5, the roll gap measuring device at least two guide rolls 58.

Therefore, when the roll gap measuring device 100 moves inside the strand together with the dummy bar 60 to measure the roll gap, upper and lower surfaces of the roll gap measuring device 100 are contacted by the guide roll 58 in the strand at all times, so that the position of the roll gap measuring device 100 may be constantly maintained. In addition, since the roll gap measuring device 100 is in contact with at least two guide rolls 58 at all times when measuring a roll gap, even when contacting the guide roll 58 with different roll gaps, the roll gap measuring device 100 may maintain a constant position in the strand measure the roll gap without being twisted. In addition, since the supporting part 120 and the measuring part 130 may move up and down by external pressure, for example, the pressing of the pinch roll 59, the damage to peripheral equipment may be suppressed or prevented due to contact.

Hereinafter, a method for measuring a roll gap of a guide roll in a strand using a roll gap measuring device according to an embodiment of the present invention will be described.

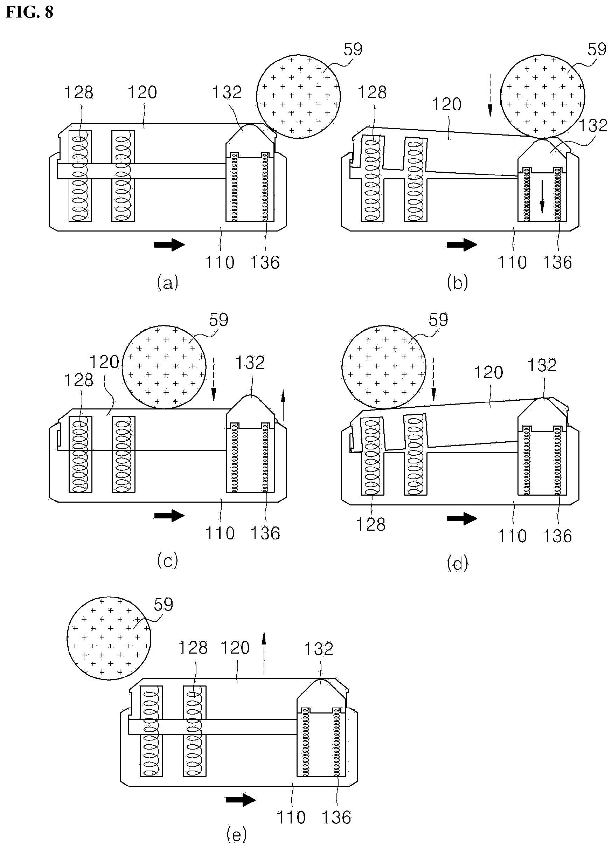

FIG. 6 is a view showing a state in which a roll gap measuring device according to an embodiment of the present invention is installed in a dummy bar. FIG. 7 is a view showing a state in which a roll gap measuring device according to an embodiment of the present invention is moved within a strand. FIG. 8 is a view showing a state in which a roll gap measuring device according to an embodiment of the present invention is deformed by a pinch roll.

First, the roll gap measuring device 100 according to an embodiment of the present invention is installed in the dummy bar 60. At this time, the roll gap measuring device 100 may be installed in the tail portion of the dummy bar 60 (See FIG. 1), and as shown in FIG. 6, at least three roll gap measuring devices 100 may be installed in the width direction of the dummy bar 60, for example, in the width direction of the strand. That is, the roll gap measuring device 100 may be installed at a center portion of the tail portion of the dummy bar 60 and on both sides thereof in the width direction of the dummy bar 60, the tail portion to be inserted into the strand through the mold during the continuous casting. Therefore, roll gap may be measured at at least three points in the longitudinal direction of the guide roll 58. Typically, volume of a roll gap measuring device was so large that it was difficult to measure a roll gap at a center portion of the guide roll 58. However, in an embodiment of the present invention, the height of the roll gap measuring device 100 may be varied, so that the size thereof may be reduced compared with that of the prior art. Therefore, it is possible to measure a gap at a plurality of points in the longitudinal direction of the guide roll 58, that is, the width direction of the slab 1. Therefore, it is possible to measure a roll gap accurately at the center portion of the guide roll 58, the portion which is relatively severely worn. In addition, in the present invention, the roll gap measuring device 100 is installed in the tail portion of the dummy bar 60, so that it is possible to measure a roll gap even during the casting of the slab 1. That is, since the roll gap measuring device 100 is installed in the tail portion of the dummy bar 60, the roll gap measuring device 100 is farthest away from the mold to which molten steel of high temperature is introduced in the strand. Therefore, it is possible to prevent the roll gap measuring device 100 from being deteriorated due to heat of molten steel or the slab 1. Therefore, by measuring a roll gap in real time during each casting process of the slab 1, the roll gap may be adjusted more accurately and thus, the quality of the slab manufactured may be improved.

When the roll gap measuring device 100 is installed in the dummy bar 60, the tail portion of the dummy bar 60 in which the roll gap measuring device 100 is installed is inserted into the inside of the strand through the mold.

Thereafter, when the dummy bar 60 is inserted into the inside of the strand, molten steel is introduced into the mold to manufacture the slab 1.

During the casting of the slab 1, the dummy bar 60 is moved along the strand by the pinch roll 59 as shown in FIG. 7. Accordingly, through the roll gap measuring device 100 installed in the dummy bar 60, a gap of the guide roll 58 in the strand is measured.

When the roll gap measuring device 100 measures the gap of the guide roll 58, as shown in FIG. 5, the roll gap measuring device 100 is supported by the guide roll 58 to maintain a stable position, and measures the gap of the guide roll 58. However, when passing a position at which the pinch roll 59 is installed which has a roll gap smaller than that of the guide roll 58, the roll gap measuring device 100 moves while changing the shape thereof as shown in FIG. 8.

First, when the roll gap measuring device 100 becomes adjacent to the pinch roll 59, an outer circumferential surface of the pinch roll 59 comes into contact with the inclined surface S1 of the supporting bar 122 as shown in FIG. 8 (a), and when the roll gap measuring device 100 starts to pass under the pinch roll 59, one side of the supporting bar 122 and the roll gap measuring head 132 are lowered into the main body 110 as shown in FIG. 8 (b). At this time, one side of the supporting bar 122 pressed by the pinch roll 59 is inclined downward. Thereafter, when the roll gap measuring device 100 passes through the pinch roll 59, the supporting bar 122 is lowered as a whole as shown in FIG. 8 (c), and the roll gap measuring head 132 provided at one side of the roll gap measuring device 100 is raised. In addition, when the roll gap measuring device 100 almost passes through the pinch roll 59, an other side of the supporting bar 122 is pressed by the pinch roll 59 to be lowered, and the one side is raised to return to the original position thereof as shown in FIG 8 (c). Thereafter, when the roll gap measuring device 100 completely passes through the pinch roll 59, the other side of the supporting bar 122 is raised to return to the original position thereof, so that an overall horizontal state is maintained.

By forming the roll gap measuring device 100 to have a variable shape or size as described above, the position of the roll gap measuring device 100 in the strand may be constantly maintained to measure the roll gap accurately.

The present invention has been described with reference to the above-described embodiments and the accompanying drawings. However, the present invention is not limited thereto, but is limited by the following claims. Therefore, it is to be understood by those skilled in the art that various changes and modifications can be made to the present invention without departing from the spirit and scope of the following claims.

### INDUSTRIAL APPLICABILITY

A roll gap measuring device of a casting machine according to the present invention may be applied to a casting machine for casting a slab to improve the quality and productivity of the slab.

## Claims

1. A roll gap measuring device of a casting machine, the device installed in a dummy bar to measure a roll gap in a strand of the casing machine, comprising:
a main body connected to the dummy bar;
a supporting part provided on an upper portion of the main body so as to be movable up and down;
a measuring unit for measuring the roll gap by being provided in the main body so as to be movable up and down.

2. The roll gap measuring device of a casting machine of claim 1, wherein
a slit into which the supporting part is inserted is formed on an upper surface of the main body in the longitudinal direction of the main body, and the slit is provided in pair while being space apart from each other in the width direction of the main body.

3. The roll gap measuring device of a casting machine of claim 2, wherein
the supporting part comprises a supporting bar extended in the longitudinal direction of the main body, and an elastic member one side of which is connected to the inside of the main body and the other side of which is connected to a bottom surface of the supporting bar so as to move the supporting bar up and down.

4. The roll gap measuring device of a casting machine of claim 3, wherein
the elastic member is connected to a plurality of points in the longitudinal direction of the supporting bar.

5. The roll gap measuring device of a casting machine of claim 4, wherein
the supporting bar has an inclined surface formed at both upper portion edges thereof with respect to the longitudinal direction of the supporting bar.

6. The roll gap measuring device of a casting machine of claim 5, wherein
the main body has a height lower than the thickness of the dummy bar.

7. The roll gap measuring device of a casting machine of claim 6, wherein
the height from a bottom surface of the main body to an upper surface of the supporting part is greater than the height of the dummy bar, and equal to or greater than the height of the strand.

8. The roll gap measuring device of a casting machine of claim 7, wherein
the measuring unit comprises a roll gap measuring sensor provided inside the main body, and a roll gap measuring head connected to the roll gap measuring sensor and provided on the upper portion of the main body so as to be movable up and down.

9. The roll gap measuring device of a casting machine of claim 8, wherein
at least a portion of the roll gap measuring sensor is provided inside the main body, and the roll gap measuring head is connected to an upper portion of the roll gap measuring sensor and is provided to protrude more than an upper portion the supporting part.

10. The roll gap measuring device of a casting machine of claim 9, wherein
the roll gap measuring sensor comprises a linear variable differential transformer (LVDT).

11. The roll gap measuring device of a casting machine of claim 10, wherein
the roll gap measuring head has a curved surface formed on an upper surface thereof.
